# EUROPEAN PATENT APPLICATION

(11) **EP 4 623 685 A1**
(43) Date of publication of application: **01.10.2025**
(21) Application number: 24382327.5
(22) Date of filing: 26.03.2024
(51) Int. Cl.: A01M 7/00

(54) **A SYSTEM FOR PRODUCT APPLICATION BASED ON REAL-TIME PLANT CHARACTERIZATION IN SPECIALTY CROPS**

(71) Applicant: Talptech, S.L., 08980 Sant Feliu de Llobregat, Barcelona (ES)
(72) Inventor: Quiñones Moreno, Eduardo, Barcelona (ES); García Llobet, Daniel, Barcelona (ES); Esteve Julia, Joan, Barcelona (ES)
(74) Representative: Pons IP

(57) **Abstract**

The present invention discloses an in-situ, real-time plant characterization and treatment system installed on a vehicle (1) comprising a plurality of sensors (2), a locator element (4), an edge-type computing unit (5), a plurality of actuators (8) for controlling the application of agricultural products based on a determined treatment, an interface electronic device (7), for connecting the edge-type computing unit (5) with the vehicle (1) to control the actuators (8) according to the instructions executed in the edge-type computing unit (5), a sprayer (3) for applying agricultural products, a user interface (6) to interact with the system software, a pressure sensor (10) to determine the pressure of the product in the spray circuit (12) connecting the tank (9) containing the product with the sprayer (3), and a cloud computing unit (11) to store all data analyzed by the edge-type computing unit (5), and further analyze and visualize the data.

## Description

### OBJECT OF THE INVENTION

The present invention relates to a system and a method for in-situ, real-time application of agricultural products based on lateral plant characterization within specialty crops.

### BACKGROUND OF THE INVENTION

Farmers can benefit significantly from modern agricultural systems for plant characterization and treatment. By accurately identifying plants and their specific needs in real-time, farmers can tailor their interventions, such as irrigation, fertilization, and pest control, to the actual requirements of each plant.

However, the increasing scale of modern agriculture brings challenges in monitoring and managing vast expanses of fields manually. Despite of the improvements in today's systems, conventional agricultural tools often face limitations that hinder their effectiveness in addressing the evolving needs of modern farming. Current agricultural systems lack real-time capabilities and are reliant on periodic manual observations, remote sensing (e.g., satellite images) or on recorded videos processed offline. This delayed feedback loop makes timely intervention difficult, and so the need for more instantaneous information to make informed decisions becomes a crucial area for improvement.

Adjusting the doses of agricultural products, such as fertilizers and pesticides, to optimize plant health while minimizing environmental impact is another critical aspect of agriculture. Plants within the same field may have different nutritional needs or susceptibility to pests and diseases. Precise adjustment of product doses requires accurate information about the individual requirements of each plant. Current systems may struggle to provide real-time, plant-specific data.

Therefore, there is need in the prior art for in-situ, real-time systems for plant characterization and treatment ensuring precise dosage adjustments of agricultural products.

### DESCRIPTION OF THE INVENTION

The present invention discloses an in-situ, real-time plant characterization and treatment system installed on a vehicle comprising at least one sensor for the characterization of each plant, a locator element for detecting the location of the vehicle and the vehicle's speed, a pressure sensor to measure the pressure of the agricultural product in the spray circuit that connects the tank containing the product with the sprayer which is used to apply the product to the plant, an edge-type computing unit configured to determine the adequate dosage adjustment of an agricultural product based on the plant characterization, the vehicle's speed and location, and the pressure of the product within the spray circuit, an interactive screen to interact with the edge-type computing unit, a plurality of actuators for controlling the application of the agricultural product by acting on the spray circuit, an interface electronic device for connecting the edge-type computing unit to control the actuators according to the instructions executed in the edge-type computing unit, and a cloud-type computing unit wirelessly connected to the edge-type computing unit for storing the data generated within the edge-type computing unit and providing a further analysis and visualization of information relevant at crop level to the farmer in the form of maps, reports, alarms, etc.

The present invention discloses an in-situ, real-time plant characterization and product dosage adjustment comprising following the steps executed in the edge-type computing unit: activating a plurality of sensors and capturing lateral images of plants, analyzing said collected data for plant characterization, obtaining the leaf volume, the crop load, the plant diseases and deficiencies state, etc., in parallel, identifying the location of the vehicle and the vehicle's speed, by using a satellite positioning unit or similar, in parallel, measuring the pressure of the product within the spray circuit, determining a dosage adjustment including the time and dosage of the application of an agricultural product according to the plant characterization, the location of the vehicle, the vehicle's speed and the pressure of the product within the spray circuit, sending orders to a plurality of actuators which control the pressure of the spray circuit and the opening and the closing of the flow of product within the the spray circuit connected to a set of sprayers for carrying out the determined dosage adjustment; in parallel, sending the analysis of the plant characterization, vehicle's location and speed, pressure of the spray circuit and the dosage adjustment to the cloud-type computing unit for the characterization of the entire plot in the cloud-type computing unit, in parallel sending alarms to the farmer in case of an anomaly is detected during the plant characterization and/or dosage adjustment. The dosage adjustment may include initial predetermined parameters provided by a user such as treatment machine configuration (type and number of actuators and sprayers), treatment speed, maximum pressure of the product spray, etc.

The present invention stores all the data analyzed by the edge-type computing unit into a cloud-type computing unit wirelessly connected to the edge-type computing unit, for the generation of information relevant of the treatment and plant characterization in the form of maps, reports, alarms, etc.

The system of the present invention provides precision farming practices improving crop yield and minimizes the environmental impact of agricultural products like pesticides, fertilizers by reducing unnecessary use of these resources.

The present invention aims to provide an automated, time and labor-saving method, additionally to allow for quicker responses to emerging issues in a field, preventing potential crop losses.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1. Shows a vehicle equipped with a system according to an embodiment of the present invention.
Figure 2. Shows a flowchart diagram of the method of an embodiment of the invention executed on the edge-type computing unit and the cloud-type computing unit.

### PREFERRED EMBODIMENT OF THE INVENTION

According to one embodiment of the invention, an in-situ, real-time plant characterization and treatment system installed on a vehicle (1) comprising; at least one sensor (2) for detecting one or more plant related values comprising leaf volume, Leaf Area Index (LAI), leaf color, leaf morphology, fruit weight and size, fruit number, fruit color, trunk diameter, trunk girth, plant height, flower development, inflorescence count, plant vigor, root depth, chlorophyll content, a locator element (4) for detecting the location of the vehicle (1) and the vehicle's (1) speed, a spray circuit (12) wherein an agricultural product flow through, a plurality of actuators (8) for controlling the application of the agricultural product by acting on the pressure of the spray circuit (12) and opening/closing the flow of the said spray circuit (12), at least one sprayer (3) controlled by the actuators (8) for applying the agricultural product, a tank (9) containing the agricultural product, connected to the sprayers (3) by the spray circuit (12) which is in connection with the actuators (8), a pressure sensor (10) attached to the spray circuit (12) for measuring the pressure of the agricultural product within the spray circuit (12), an edge-type computing unit (5) configured to determine a dosage adjustment of the agricultural product based on one or more plant related values, the location of the vehicle (1), the vehicle's (1) speed and the pressure of the agricultural product in the spray circuit (12), a user interface (6) connected to the edge-type computing unit (5) comprising a manual/automatic operation selector and an interactive screen to interact with the edge-type computing unit (5), an interface electronic device (7) to transform signals coming from the edge-type computing unit (5) to the corresponding signals for the actuators (8) to control the application of the agricultural product, according to the instructions executed in the edge-type computing unit (5), a cloud computing unit (11) wirelessly connected to the edge-type computing unit (5) to store the data captured by the sensors (2), the locator element (4), the pressure sensor (10) and analyzed by the edge-type computing unit (5) to further analyze said captured and analyzed data to identify differential management zones corresponding to the zones in a plot of a field with the same characteristics of the analyzed plant related values and to further visualize said analyzed data in the form of maps, trigger alarms and generate automatic reports for a user.

The system of the invention can generate automatic reports in the form of emails, documents, text messages, and the like, that can be presented to certifying bodies as evidence of the complete traceability of the plant treatment.

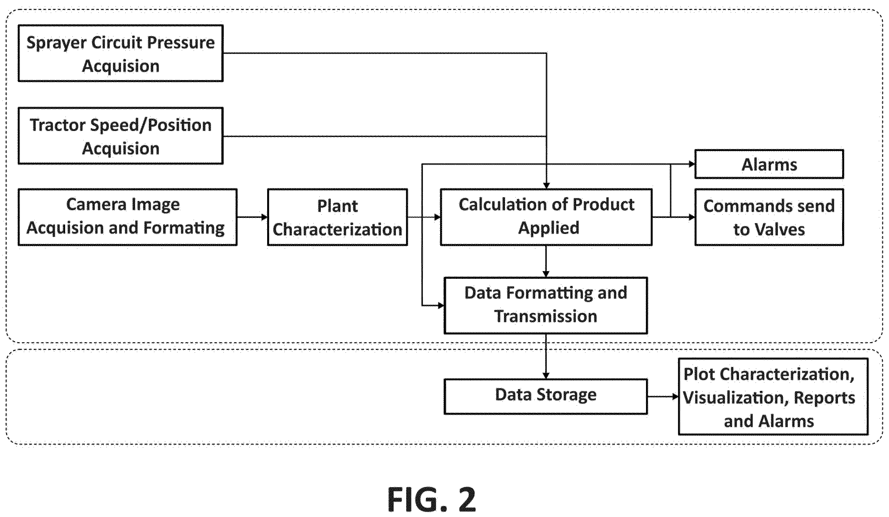

The edge-type computing unit (5) installed on the vehicle (1) executes a subset of methods described in Figure 2 meeting the operational requirements of power and temperature of the vehicle (1). The edge-type computing unit (5) may include acceleration devices for artificial intelligence operations.

The cloud computing unit (11) comprises any remote computing resource wirelessly connected to the edge-type computing unit (5). The cloud computing unit (1) executes a subset of the methods described in Figure 2 to store the data captured by the sensors (2), the locator element (4) and the pressure sensor (10) and analyzed by the edge-type computing unit (5), and to characterize the complete crop, allowing to visualize the information in the form of maps, reports and alarms related to the characterization of plants and the application of the agricultural product. The edge-type computing unit (5) and the cloud computing unit (11) are connected with a wireless communication device implementing communication technology such as 4G, LTE, 5G, Wifi or similar. The edge-type computing unit (5) operates independently of the cloud computing unit (11).

The vehicle (1) according to the present invention can be any existing motor vehicle like farm tractor or utility terrain vehicle or any other conventional vehicle that is able to drive through the fields. The plant characterization and treatment system of the present invention has a modular structure for realizing its installation to any existing vehicle.

The plant characterization and treatment system acquire and formats data from a plant using a plurality of the sensors (2) installed in the vehicle (1), which can be cameras like RGB, stereoscopic, multispectral, hyperspectral, LIDAR or the like to capture colored and depth images of the plants and extract various vegetation parameters such as leaf volume, plant disease and deficiency state, crop load, etc. Images are taken from the sides of the plants.

The edge computing unit (5) has the software that allows analyzing the data coming from the sensors (2) in the form of a large amount of data streams for example a video in case of RGB cameras or point clouds in case of LiDAR sensors, the data coming from the locator element (4), the data coming from the pressure sensor (10) and drawing conclusions in real time.

An agricultural product according to the present invention can be a substance that may be used in the growing of a plant includes fertilizers, seeds, pesticides, biosolids, water, soil conditioners, drugs, supplements, additives, and other substances which are related with agricultural purposes. The system of the invention uses one or more tanks (9) located in the vehicle (1) filled with an agricultural product.

The locator element (4) according to the present invention can be a GPS (Global Positioning System) technology or any other available technology for positioning the vehicle (1). A GPS can also be used for measuring the speed of the vehicle (1). The system of the invention can additionally comprise a speed sensor for measuring the speed of the vehicle (1). The locator element also detects the distance travelled by the vehicle (1) and precise location of the vehicle (1) within a crop.

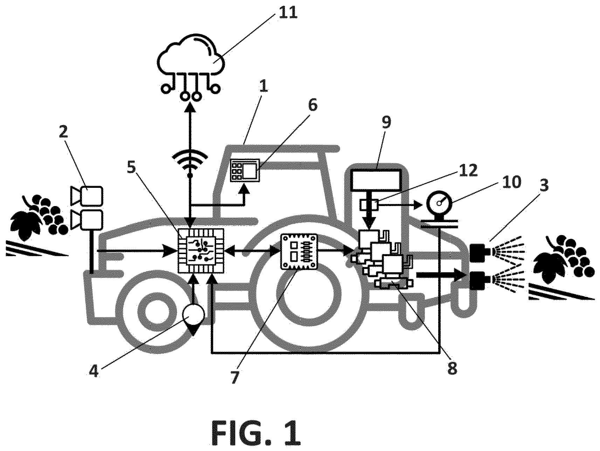

As shown in Fig. 1. the plant characterization and treatment system that implements the method of the invention is installed in the vehicle (1) and comprises some physical elements like the sensors (2), the edge-computing unit (5), the sprayer (3), the locator element (4), the actuators (8), the interactive screen (not shown), the user interface (6), the interface electronic device (7), the pressure sensor (10), the spray circuit (12), the tank (9), the wireless communication device (not shown).

The pressure sensor (10) is attached to the spray circuit (12) that connects the tank (9) containing the agricultural product with the sprayers (3) for measuring the pressure of the product in the spray circuit (12). The measured pressure is sent to the edge computing unit (5) and fuse with the sensor (2) data and the vehicle's (1) speed and location data to calculate the dose of the product to be applied. The pressure of the spray circuit (12) and the opening and closing of the flow of product within the spray circuit (12) are controlled by a plurality of actuators (8). The actuators (8) adjust the dosage by increasing/reducing the pressure on the spray circuit (12) or opening/closing the flow of the product in the spray circuit (12). The spray circuit (12) may include multiple branches, each connected to a sprayer (3), to apply the agricultural product to different heights of the plant or to the different sides of the plant. The actuators (8) can be solenoid valves, bidirectional electro valves, bidirectional pressure valves, pneumatic valves, hydraulic valves, butterfly valves, gate valves, proportional valves, on-off valves, and the like.

According to the invention, a treatment element like sprayer (3) can be a spray nozzle, a control flow diffuser, mist blowers, pneumatic or hidropneumatic sprayers or similar.

The user interface (6) comprises a manual/automatic selector of dosage application. When operating manually, the system of the invention resembles the exact same behavior as not having the system of the invention installed; when operating automatically, the system autonomously applies the agricultural product based on plant characterization, vehicle's (1) speed and location, and the pressure of the product in the spray circuit (12).

The user interface (6) may include an interactive screen on which the farmer can interact with the system and visualize in real-time, the data related to the plant treatment, the plant characterization or any relevant value analyzed by the edge-type computing unit (5) or the cloud computing unit (11).

The system of the invention can additionally include a power unit, which functions to distribute power from the power unit to the system elements. The power source of the power unit can be an electricity generator, a set of batteries or any other suitable power source.

Fig. 2 shows a flowchart diagram of the method according to the present invention.

In one embodiment of the invention, an in-situ, real-time plant characterization and treatment method comprises the steps of activating a plurality of sensors (2) to capture lateral images from the plants for measuring one or more plant related values comprising leaf volume, Leaf Area Index (LAI), leaf color, leaf morphology, fruit weight and size, fruit number, fruit color, trunk diameter, trunk girth, plant height, flower development, inflorescence count, plant vigor, root depth, chlorophyll content, in parallel, identifying the location of the vehicle (1) and the vehicle's (1) speed, by using a locator element (4), in parallel, computing the pressure of an agricultural product within a spray circuit (12) by using a pressure sensor (10), processing, fusing, and storing the plant related values, the location of the vehicle (1), the vehicle's (1) speed and the pressure of the agricultural product, determining a dosage adjustment including the time and dosage of the application of an agricultural product according to one or more plant related values, the pressure of the agricultural product in the spray circuit (12), the location of the vehicle (1) and the vehicle's (1) speed, sending orders to a plurality of actuators (8) for controlling the pressure within the spray circuit (12) and/or opening/closing the flow of the spray circuit (12) wherein the agricultural product flowing through and carrying out the determined dosage adjustment, and formatting and sending the generated data within the edge-type computing unit (5) comprising the sensor (2) data, the locator element (4) data, the pressure sensor (10) data, and the determined dosage adjustment to a cloud computing unit (11) to further monitor the health and growth of each plant within the field,

As shown in Figure 2, the software of the system of the present invention implements a workflow composed of a set of dependent software processes, executed in real-time on the edge-type computing unit (5) and the cloud computing unit (11). A deployment of software processes on the edge-type computing unit (5) may include the acquisition of images using a plurality of the sensors (2), the acquisition of position and speed of the vehicle (1), the acquisition of the product's pressure within the spray circuit (12), the characterization of the plants, the calculation of the amount of agricultural product required by each plant, the generation of the corresponding commands for actuators (8) through the interface electronic device (7), the generation of alarms in real-time, the formatting all the collected data and sending the data generated in the edge-type computing unit (5) to the cloud computing resource (11). The system of the invention also comprises a user interface (6) connected to all software processes executed on the edge-type computing unit (5). A deployment of software processes on the cloud computing unit (11) may include data storage and documentation, plot characterization, visualization in the form of maps, alerts and alarms, and documentation capabilities for farmers to record and analyze the entire crop and the agricultural product application data.

Overall, the data is used to create detailed knowledge providing valuable insights for future decision-making to optimize future application strategies. Plot characterization means storing characterization data for each plant for characterizing an entire plot which can be a certain zone in the working field.

The workflow executed in the edge-type computing unit (5) is guaranteed to be executed in real-time, meaning that the amount of the product applied to a plant has been calculated with the images of the exact same plant captured by the sensors (2), the corresponding vehicle's (1) location, vehicle's (1) speed and the pressure on the spray circuit (12), and the alarms issued will correspond to the anomaly detected on the corresponding plant characterization and/or dosage adjustment. The workflow executed in the cloud computing resource (11) does not have real-time requirements, except for the generation of alarms that may require near real-time response.

The farmers consider various vegetation parameters to monitor the health and growth of plants. These parameters can be the leaf volume, the Leaf Area Index (LAI) that indicates the extent of foliage and canopy development, leaf color, leaf morphology (leaf shape, size, and structure for signs of stress or disease, leaf stomatal conductance (measures the openness of leaf pores, affecting gas exchange), fruit size and weight, fruit color, fruit number, trunk diameter, trunk girth, plant height, flower development, inflorescence count (tracks the number of flower clusters), plant vigor, root depth, chlorophyll content and the like. The plant characterization process emulates the exact same analysis done by the farmer.

Based on the dataset generated in the edge-type computing unit (5) and stored in the cloud computing unit (11), a treatment traceability is generated by keeping a comprehensive record of every treatment, including all relevant variables such as dosage and the data used to calculate it, timing, quantifies the savings achieved during the treatment and specific conditions are recorded. This recorded data can be downloaded and presented to certifying bodies as evidence of the complete traceability of the plant treatment to enhance transparency and accountability in the agricultural practices, making it easier to comply with certification requirements. Said documentation can be extracted in the form of emails, text messages, documents, maps, etc.

The plant related data calculated from the sensors (2) data for plant characterization, together with the vehicle's (1) location and speed and the sensor pressure (10) data, is used by the system of the present invention to determine a dosage adjustment. The control of the application of that dosage adjustment is realized by the actuators (8) which acts on the pressure and opening/closing of the spray circuit (12) to adjust the pressure at which the product is applied through the sprayers (3), based on the calculations computed by the software of the system of the invention, executed in the edge-type computing unit (5) and transformed by the interface electronic device (7).

The system of the invention collects the following data processed and analyzed by the edge-computing unit (5) of interest for a user, such as: treatment time, spray circuit (12) pressure, opening/closing time of the spray circuit (12), agricultural product savings, yield, agronomic data like vigor, bud counts, shoots, fruits of the plant, the data of identification of pests, diseases, deficiencies, and the data of the untreated zones. All this data is uploaded to the cloud computing unit (11), in which a further off-line crop analysis and data visualization is performed, generating outputs like alarms, warnings, subscriber recommendation maps, harvest prediction and similar information. The connection of the edge-type computing unit (5) with the cloud computing unit (11) is provided by wireless technology for example LTE, 4G, 5G, Wi-Fi or similar.

Alarms can be generated based on the plant characterization, the locator (4) data, the sensor pressure (10) data and calculation of the agricultural product applied. The alarms provide real-time information for the farmer, including any untreated rows or detected anomalies in plants like diseases, deficiencies, etc. and provide a fast response to the user. Alarms can be generated by the edge-type computing unit (5) and displayed on the interactive screen through the user interface (6) or through the cloud computing resource (11) via email, phone message, etc.

The instructions executed in the edge-type computing unit (5) for determining the dosage adjustment of an agricultural product may have to consider the distance between the sensors (2) and the sprayers (3) to ensure that the characterization of the plant used to calculate the dosage and the plant in which the dosage is applied are the same, guaranteeing the precision of the application of said treatment. That distance may vary depending on the vehicle (1), the treatment machine and the installation of the system of the present invention to the vehicle (1).

The treatment system and the method of the present invention realize dosage adjustment decisions based on the same initial configuration of current state-of-the-art treatment campaigns, according to the specific treatment needs defined by a set of preselected parameters configured by the farmer, which may include the maximum working pressure within the spray circuit (12), the recommended vehicle's (1) speed, type of nozzles, valves and similar. The system of the invention does not interfere with the initial decision-making process but rather optimizes the initial configuration automatically. The software of the invention has the initial configuration provided by the farmer.

The invention allows defining multiple operation modes of dose adjustment to address the treatment needs of the farmer in which the plant characterization and vehicle's (1) speed factor are combined differently. In all cases, the pressure of the product within the spray circuit (12) acquired by the pressure sensor (10) is used for the dosage adjustment.

According to one example of the invention, the system adjusts the dosage of the treatment according to the leaf volume of the plant, computed by the plant characterization process. It ensures each leaf receives an equal dose, by automatically increasing or decreasing the pressure in the spray circuit (12) based on the identified leaf volume; more leaves identified, more volume of the product is applied by sprayers (3) by increasing its pressure in the spray circuit (12). When no leaf is detected, no product is applied by closing the flow of the product in the spray circuit (12). The flow of the agricultural product is continuously adjusted by increasing or decreasing the pressure of the product in the spray circuit (9) automatically through the actuators (8) versus a reference value fixed by the farmer. The commands are sent to actuators (8) considering the relationship between the pressure and the volume of product applied per sprayer (3). In case of using a hydropneumatic sprayer, said relation is standardized in said sprayer (3)

According to another example of the invention, the system adjusts the dosage of the treatment according to the crop load, which comprises the fruit size and the fruit number, identified by the plant characterization process, similar as the dose adjustment based on leaf volume operation mode. The more crop load calculated, the more protection is required for that fruit by increasing the pressure within the spray circuit (12). When no fruit is detected, the flow in the spray circuit (12) is closed. This mode is especially relevant for those treatments that focus on fruit protection, i.e., by recognizing the actual harvest load, the system adjusts the pesticide dosage accordingly. This dynamic adjustment ensures that the treatment aligns with the current state of the crop, preventing over-application or under-application of pesticides or other agricultural products. The ability to adapt dosage based on real-time fruit counting enhances the precision and efficiency of the treatment process.

According to another example of the invention, the system adjusts the dosage treatment based on the detection of diseases or pests, identified by the plant characterization process. In such instances, the volume of the product to apply varies to ensure a more targeted and effective application of the necessary treatment, by increasing or reducing the pressure within the spray circuit (12) or by closing the flow of the product in the spray circuit (12). This real-time characterization and adjustment mechanism enhance the precision and responsiveness of the treatment process, contributing to the overall efficacy of the system in managing and mitigating potential threats to crop health.

According to another example of the invention, the system adjusts the dosage based on the speed of the vehicle (1) acquired by the locater element (4) to maintain consistent coverage across the field, even when the vehicle (1) is operating at varying speeds. This adjustment is crucial for ensuring that the application of agricultural products remains uniform and effective across different speeds. As the vehicle (1) accelerates, indicating a higher speed, the system recognizes the need for an increased dosage to maintain the desired coverage by increasing the pressure within the spray circuit (12). This ensures that the amount of product delivered remains proportional to the speed of the vehicle (1), facilitating uniform coverage across the entire field. Conversely, when the vehicle (1) decelerates or operates at a lower speed, the system adapts by reducing the dosage volume by reducing the pressure within the spray circuit (12). When the vehicle (1) stops, the application of the product is stopped by closing the flow of product in the spray circuit (12).

According to another example of the invention, the system defines a dose adjustment based on the combination of two or more factors mentioned before like the vehicle's (1) speed and plant related values comprising leaf volume, plant disease and deficiencies state, crop load consisting of fruit size and fruit number of each plant, Leaf Area Index (LAI), leaf color, leaf morphology, fruit weight, fruit color, trunk diameter, trunk girth, plant height, flower development, inflorescence count, plant vigor, root depth, chlorophyll content. The system adjusts the dosage combining all or at least two of said values to increase or reduce the pressure within the spray circuit (12) or closing the flow of the product in the spray circuit (12).

Other configurations combining a subset of said plant related values, the speed of the vehicle (1), for defining the dosage adjustment are possible. The combination of these factors to calculate the dosage adjustment can be done based on relative weights preselected by the user to balance the importance of one factor with respect to another.

The method and system of the present invention can be used for specialty crops like vineyards, fruit trees, olive trees, nuts, citrus fruits, and any other crops grown on trellised 2D structures. These plants are seen or analyzed from their sides, not from the top.

## Claims

1. An in-situ, real-time plant characterization and treatment system installed on a vehicle (1) comprising:
- at least one sensor (2) for detecting one or more plant related values comprising leaf volume, Leaf Area Index (LAI), leaf color, leaf morphology, fruit weight and size, fruit color, trunk diameter, trunk girth, plant height, flower development, inflorescence count, plant vigor, root depth, chlorophyll content,
- a locator element (4) for detecting the location of the vehicle (1) and the vehicle's (1) speed,
- a spray circuit (12) wherein an agricultural product flow through,
- a plurality of actuators (8) for controlling the application of the agricultural product by acting on the pressure of the spray circuit (12), and opening/closing the flow of the said spray circuit (12),
- at least one sprayer (3) controlled by the actuators (8) for applying the agricultural product,
- a tank (9) containing the agricultural product, connected to the sprayers (3) by the spray circuit (12) which is in connection with the actuators (8),
- a pressure sensor (10) attached to the spray circuit (12) for measuring the pressure of the agricultural product within the spray circuit (12),
- an edge-type computing unit (5) configured to determine a dosage adjustment of the agricultural product based on one or more plant related values, the location of the vehicle (1), the vehicle's (1) speed and the pressure of the agricultural product in the spray circuit (12),
- a user interface (6) connected to the edge-type computing unit (5) comprising a manual/automatic operation selector and an interactive screen to interact with the edge-type computing unit (5),
- an interface electronic device (7) to transform signals coming from the edge-type computing unit (5) to the corresponding signals for the actuators (8) to control the application of the agricultural product, according to the instructions executed in the edge-type computing unit (5),
- a cloud computing unit (11) wirelessly connected to the edge-type computing unit (5) to store the data captured by the sensors (2), the locator element (4) and the pressure sensor (10), analyzed by the edge-type computing unit (5), and the determined dosage adjustment of the agricultural product, to further analyze said captured and analyzed data to identify differential management zones corresponding to the zones in a plot of a field with the same characteristics of the analyzed plant related values and to further visualize said analyzed data in the form of maps, trigger alarms and generate automatic reports for a user.

2. An in-situ, real-time plant characterization and treatment method comprising:
- activating a plurality of sensors (2) to capture lateral images from the plants of a crop for measuring one or more plant related values comprising leaf volume, Leaf Area Index (LAI), leaf color, leaf morphology, fruit weight and size, fruit number, fruit color, trunk diameter, trunk girth, plant height, flower development, inflorescence count, plant vigor, root depth, chlorophyll content,
- in parallel, identifying the location of the vehicle (1) and the vehicle's (1) speed, by using a locator element (4),
- in parallel, computing the pressure of an agricultural product within a spray circuit (12) by using a pressure sensor (10),
- processing, fusing, and storing the plant related values, the location of the vehicle (1), the vehicle's (1) speed and the pressure of the agricultural product,
- determining a dosage adjustment including the time and dosage of the application of an agricultural product according to one or more plant related values, the pressure of the agricultural product in the spray circuit (12), the location of the vehicle (1) and the vehicle's (1) speed,
- sending orders to a plurality of actuators (8) for controlling the pressure within the spray circuit (12) and/or opening/closing the flow of the spray circuit (12) wherein the agricultural product flowing through and carrying out the determined dosage adjustment, and
- formatting and sending the generated data within the edge-type computing unit (5) comprising the sensor (2) data, the locator element (4) data, the pressure sensor (10) data, and the determined dosage adjustment to a cloud computing unit (11) to monitor the health and growth of each plant of the crop

3. The method of claim 2, wherein the step of determining a dosage adjustment vary based on one factor selected from a group of factors comprising plant related values comprising the leaf volume, the plant disease and deficiencies state, the crop load and the speed of the vehicle (1).

4. The method of claim 2 and 3, wherein the step of determining a dosage adjustment vary based on a combination of factors selected from a group of factors comprising plant related values comprising the leaf volume, the plant disease and deficiencies state, the crop load and the speed of the vehicle (1) permitting a user to assign a relative weight for each factor.

5. The method of claim 2, additionally comprising uploading all the collected data from the sensors (2), the locator element (4), the pressure sensor (10) and the determined dosage adjustment generated within the edge-type computing unit (5) to the cloud computing unit (11) through wireless connections for subsequent analysis and interpretation that generate outputs like alarms, warnings, subscriber recommendation maps, harvest prediction.
